# EUROPEAN PATENT SPECIFICATION

(11) **EP 0 589 273 B1**
(45) Date of publication and mention of the grant of the patent: **26.02.1997**
(21) Application number: 93114268.1
(22) Date of filing: 06.09.1993
(51) Int. Cl.: B60G 3/20

(54) **Rear suspension system for independent wheels of motor vehicles**
Hinterradaufhängungssystem für Kraftfahrzeuge mit unabhängigen Rädern
Train arrière à roues indépendantes pour véhicules automobiles

(30) Priority: 21.09.1992 IT TO920779
(43) Date of publication of application: 30.03.1994
(73) Proprietor: FIAT AUTO S.p.A., 10135 Torino (IT)
(72) Inventor: Egidi, Corrado, I-10139 Torino (IT)
(74) Representative: Marchitelli, Mauro

(56) References cited:
- EP-A- 0 141 092
- EP-A- 0 187 072
- EP-A- 0 462 399
- DE-A- 4 110 142
- FR-A- 1 353 915
- FR-A- 1 577 657
- GB-A- 2 256 401
- PATENT ABSTRACTS OF JAPAN vol. 11, no. 356 (M-644)(2803) 20 November 1987 & JP-A-62 134 309 (HONDA MOTORS CO.)
- MACHINE DESIGN vol. 62, no. 3 , 8 February 1990 , US 'FIFTH LINK IMPROVES REAR SUSPENSION'

## Description

The present invention relates to a rear suspension system for independent wheels of motor vehicles of the type comprising a vertical link provided with an axle for supporting a wheel, said vertical link being articulated to the vehicle chassis by means of a pair of lower transverse arms, at a spacing from one another in the direction of the longitudinal axis of the vehicle and by means of a third transverse arm disposed above the first two arms, the vertical link furthermore being connected to a longitudinal arm having a front end articulated on the vehicle chassis and a rear end articulated on the vertical link.

A suspension system of the type described above is disclosed in document DE-36 33 789. In the suspension system described in this document all the loads or the longitudinal load components (parallel with the direction of movement of the vehicle) are supported by the longitudinal arm and are transmitted from the vertical link to the arm via a single joint connecting said two components.

EP-A-0 187 072 shows a rear suspension for vehicles having a vertically oriented shock absorber fixed at its upper end to the body of the vehicle. The lower end of the shock absorber is articulated to two transverse arms. A longitudinal arm has a front end articulated to the body of the vehicle and a rear end articulated to the shock absorber above an horizontal axle supporting the braking system.

JP-A-62- 134 309 shows a suspension element which is articulated to the body of the vehicle by means of three transverse arms and a longitudinal arm. A connecting rod is arranged along a longitudinal direction and has a front end articulated to the longitudinal arm and a rear end articulated to the suspension element.

In accordance with the present invention, a suspension system of the above type is provided which is characterised in that the rear end of said longitudinal arm is articulated to the vertical link by means of a spherical joint located below the axle and in that the vertical link is provided with an integral extension extending substantially parallel to the longitudinal arm and connected to the latter by means of a connecting rod having an upper end articulated on the extension and a lower end articulated to the longitudinal arm at a point located on the line joining the articulation points of the ends of the longitudinal arm.

Owing to these characteristics it is possible to attain the necessary degree of rigidity in the connection between the longitudinal arm and the vertical link for transmitting the longitudinal forces and simultaneously reducing the effect of the longitudinal arm on the suspension movement of the vertical link the movement of which is imposed solely on the transverse arms.

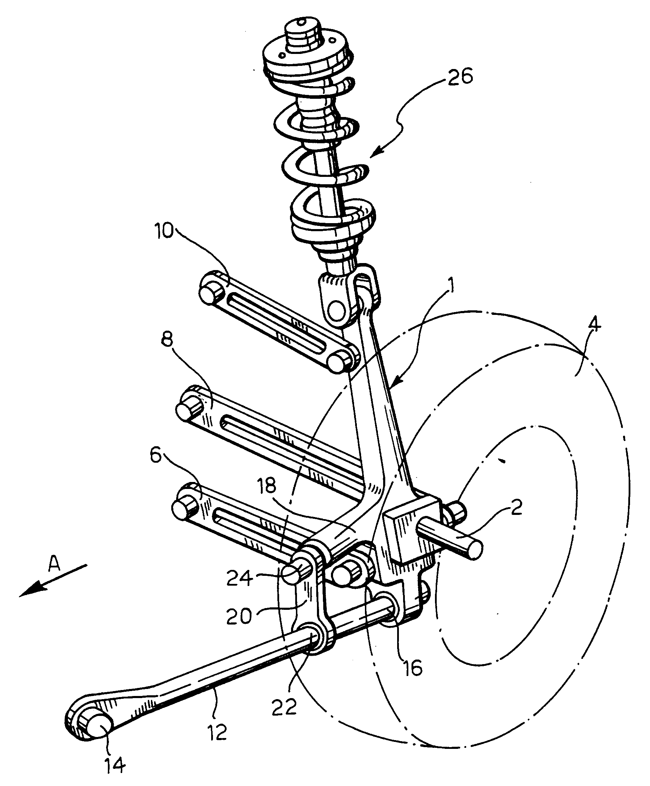

Further characteristics and advantages of the invention will become apparent from the following detailed description given purely by way of non-limiting example, and with reference to the appended drawing which shows schematic view of a suspension system according to the invention in perspective.

With reference to the drawing, the suspension system comprises a vertical link 1 provided with an axle 2 for rotatably supporting a wheel 4. The vertical link 1 is articulated on the vehicle chassis by means of a pair of lower transverse arms 6, 8 and by means of a third transverse arm 10 disposed above the first two arms. Each arm 6, 8 and 10 is articulated on the vertical link and the vehicle chassis by spherical-type joints. The orientation, length and position of the articulation points for the arms 6, 8 and 10 are determined such that the required characteristics are attained for the vertical suspension movement of the wheel 4.

The vertical link 1 is further connected to a longitudinal arm 12 extending towards the front part of the vehicle (in the Figure the vehicle direction of travel is indicated by the arrow A). The front end of the longitudinal arm 12 is articulated on the vehicle chassis whilst the rear end is articulated on the vertical link 1. Articulations of this type are obtained by means of spherical joints 14 and 16 respectively.

The vertical link 1 is provided with an integral extension 18 substantially parallel with the longitudinal arm 12. The extension 18 is connected to the longitudinal arm 12 by means of a connecting rod 20 of which one end is articulated at 22 to the arm 12 and the other is articulated at 24 to the extension 28. The articulations 22, 24 in this case are also provided by spherical joints.

The object of the longitudinal arm 12 is to support the loads or load components directed longitudinally. The rotational moments induced in the vertical link 1 by the traction loads (if the wheel is a drive wheel) and by the braking loads are supported by the connecting rod 20 which in turn transmits them to the longitudinal arm 12.

The stability of the longitudinal arm 12 under the effect of the various loads acting in correspondence with the spherical joints 14, 16 and 22 is ensured in that the centres of the above three joints are aligned relative to one another.

The connecting rod 20 is normally positioned vertically relative to the ground. Any deviations from this direction can alter the sinking effect on braking (antidive effect) which is typical of this suspension system. In particular, the antidive effect is reduced if the centre of rotation 24 is located further towards the vehicle interior than the centre 22. Moreover, decreasing the length of the connecting rod 20 increases this reduction.

The vertical loads are supported and transferred to the vehicle chassis by a spring - shock absorber assembly 26 disposed between the vertical link 1 and the vehicle chassis and connected to these parts by means of spherical joints.

The spring and shock absorber can be disposed in any other position, not necessarily together, on the vertical link or on the arms 6, 8, 10, expediently reinforcing them in accordance with the ultimate function to be fulfilled.

The suspension system according to the invention can also be used for rear steering suspension systems connecting one of the two lower arms (for example the rear arm 8) to a steering kinematic mechanism. Joints of the spherical type are meant to be articulations obtained by means of spherical pins, universal joints or rubber bushes or some other system enabling the two components to rotate relative to one another.

## Claims

1. A suspension system for independent wheels of motor vehicles, comprising a vertical link (1) provided with an axle (2) for supporting a wheel (4), said vertical link (1) being articulated to the vehicle chassis by means of a pair of lower transverse arms (6, 8) at a spacing from one another in the direction of the longitudinal axis of the vehicle and by means of a third transverse arm (10) disposed above the first two arms, the vertical link (1) furthermore being connected to a longitudinal arm (12) having a front end (14) articulated to the vehicle chassis and a rear end (16) articulated to the vertical link (1), characterised in that the rear end (16) of said longitudinal arm (12) is articulated to the vertical link (1) by means of a spherical joint located below the axle (2), and in that the vertical link (1) is provided with an integral extension (18) extending substantially parallel to the longitudinal arm and connected to the latter by means of a connecting rod (20) having an upper end (24) articulated to the extension (18) and a lower end (22) articulated to the longitudinal arm (12) at a point located on the line joining the articulation points (14,16) of the ends of the longitudinal arm.

2. A suspension system according to Claim 1, characterized in that both the articulations (22, 24) of the connecting rod (20) are provided by means of joints of the spherical type.

3. A suspension system according to any one of the preceding claims, characterized in that the connecting rod (20) is disposed such that an alteration in its orientation and/or of its length varies the antidive effect of the suspension system.

## Patentansprüche

1. Aufhängungssystem für voneinander unabhängige Räder eines Kraftfahrzeuges, umfassend ein vertikales Verbindungselement (1), welches mit einer zum Tragen eines Rades (4) bestimmten Achse (2) versehen ist, wobei das vertikale Verbindungselement (1) mit dem Fahrgestell des Fahrzeuges durch ein Paar Querarme (6, 8), die in Richtung der Fahrzeuglängsachse voneinander beabstandet sind, und durch einen dritten über den ersten beiden Armen angeordneten Querarm (10) gelenkig verbunden ist, wobei das vertikale Verbindungselement (1) weiters mit einem Längsarm (12) verbunden ist, der ein mit dem Fahrgestell des Fahrzeuges gelenkig verbundenes vorderes Ende (14) und ein mit dem vertikalen Verbindungselement (1) gelenkig verbundenes hinteres Ende (16) aufweist, dadurch gekennzeichnet, daß das hintere Ende (16) des Längsarmes (12) mit dem vertikalen Verbindungselement (1) mit Hilfe eines unter der Achse (2) angeordneten Kugelgelenkes gelenkig verbunden ist, und daß das vertikale Verbindungselement (1) mit einem integrierten Verlängerungsteil (18) versehen ist, welcher sich im wesentlichen parallel zum Längsarm erstreckt und mit letzterem durch eine Verbindungsstange (20) verbunden ist, die ein mit dem Verlängerungsteil (18) gelenkig verbundenes oberes Ende (24) und ein unteres Ende (22) aufweist, welches mit dem Längsarm (12) an einer Stelle gelenkig verbunden ist, die auf einer Verbindungslinie der gelenkigen Enden (14, 16) des Längsarmes liegt.

2. Aufhängungssystem nach Anspruch 1, dadurch gekennzeichnet, daß beide gelenkigen Enden (22, 24) der Verbindungsstange (20) Kugelgelenke sind.

3. Aufhängungssystem nach einem der vorhergehenden Ansprüche, dadurch gekennzeichnet, daß die Verbindungsstange (20) so angeordnet ist, daß eine Änderung ihrer Lage und/oder Länge die Bremsnickwirkung des Aufhängungssystems verändert.

## Revendications

1. Système de suspension pour roue indépendante de véhicule à moteur, comprenant une bielle verticale (1) ayant un essieu (2) de support d'une roue (4), la bielle verticale (1) étant articulée sur le châssis du véhicule par une paire de bras inférieurs transversaux (6, 8) espacés l'un de l'autre dans la direction de l'axe longitudinal du véhicule et par un troisième bras transversal (10) placé au-dessus des deux premiers bras, la bielle verticale (1) étant en outre raccordée à un bras longitudinal (12) qui possède une extrémité avant (14) articulée sur le châssis du véhicule et une extrémité arrière (16) articulée sur la bielle verticale (1), caractérisée en ce que l'extrémité arrière (16) du bras longitudinal (12) est articulée sur la bielle verticale (1) par un joint sphérique placé sous l'essieu (2), et en ce que la bielle verticale (1) a un prolongement solidaire (18) qui est pratiquement parallèle au bras longitudinal et est raccordé à celui-ci par une barre de liaison (20) ayant une extrémité supérieure (24) articulée sur le prolongement (18) et une extrémité inférieure (22) articulée sur le bras longitudinal (12) en un point qui se trouve sur la ligne reliant les points d'articulation (14, 16) des extrémités du bras longitudinal.

2. Système de suspension selon la revendication 1, caractérisée en ce que les articulations (22, 24) de la barre de liaison (20) sont formées par des joints de type sphérique.

3. Système de suspension selon l'une quelconque des revendications précédentes, caractérisée en ce que la barre de liaison (20) est disposée de manière qu'une modification de son orientation et/ou de sa longueur modifie l'effet anti-plongée du système de suspension.
